# FASCICULE DE BREVET EUROPEEN

(11) **EP 3 749 537 B1**
(45) Date de publication et mention de la délivrance du brevet: **29.12.2021**
(21) Numéro de dépôt: 19710038.1
(22) Date de dépôt: 07.02.2019
(51) Int. Cl.: F04D 25/08, F04D 29/28, F04D 29/58, B60H 1/00, F04D 27/00, H05K 7/20

(54) **MODULE DE COMMANDE DE PULSEUR ET INSTALLATION DE CHAUFFAGE ET/OU VENTILATION ET/OU CLIMATISATION CORRESPONDANTE**
GEBLÄSESTEUERMODUL UND ENTSPRECHENDE HEIZUNGS- UND/ODER BELÜFTUNGS- UND/ODER KLIMAANLAGE
BLOWER CONTROL MODULE AND CORRESPONDING HEATING AND/OR VENTILATION AND/OR AIR CONDITIONING DEVICE

(30) Priorité: 09.02.2018 FR 1851092
(43) Date de publication de la demande: 16.12.2020
(73) Titulaire: VALEO SYSTEMES THERMIQUES, 78320 Le Mesnil Saint-Denis (FR)
(72) Inventeur: BARAT, Didier, 78322 LE MESNIL SAINT-DENIS CEDEX (FR); ROY, Arnaud, 78322 LE MESNIL SAINT-DENIS CEDEX (FR); PROVINZANO, Biagio, 78322 LE LESNIL SAINT-DENIS CEDEX (FR); DE SOUZA, Stéphane, 78322 LE MESNIL SAINT-DENIS CEDEX (FR); LE SUEUR, Paul, 78322 LE MESNIL SAINT-DENIS CEDEX (FR); LAAIOUNI, Iliass, 78322 LE MESNIL SAINT-DENIS CEDEX (FR)
(74) Mandataire: Valeo Systèmes Thermiques
(86) Numéro de dépôt international: PCT/FR2019/050268
(87) Numéro de publication internationale: WO 2019/155164

(56) Documents cités:
- DE-A1-102010 046 672
- FR-A1- 2 742 816
- FR-A1- 2 766 301
- FR-A1- 2 868 018
- FR-A1- 3 044 604
- FR-A1- 3 046 958

## Description

L'invention est du domaine des installations de ventilation, chauffage et/ou climatisation, en particulier pour un véhicule automobile. L'invention concerne en particulier un module de commande d'un pulseur pour une telle installation.

Les installations de chauffage et/ou ventilation et/ou climatisation pour véhicule automobile, également connues sous la dénomination anglaise HVAC (pour Heating, Ventilation and Air-Conditioning) permettent de distribuer de l'air dans un habitacle du véhicule et comportent généralement un conduit d'air dans lequel sont disposés divers moyens de traitement thermique de l'air. Les moyens de traitement thermique de l'air sont notamment des échangeurs thermiques, pour le chauffage et/ou le refroidissement, par exemple un radiateur de chauffage d'air et un évaporateur destiné à refroidir l'air.

Le flux d'air circulant dans l'installation de chauffage et/ou ventilation et/ou climatisation est généré par un groupe moto-ventilateur, aussi appelé pulseur ou pulseur d'air, qui est monté au niveau d'une volute de l'installation assurant la canalisation du flux d'air. Le flux d'air est dirigé, par l'intermédiaire du pulseur, vers une ou plusieurs sorties de l'installation débouchant dans l'habitacle, après avoir été traité thermiquement.

Le pulseur comporte notamment une roue de ventilateur ou turbine logée dans la volute pour engendrer un flux d'air dans celle-ci, et un moteur d'entraînement électrique apte à mettre en rotation la roue de ventilateur. Classiquement, le pulseur, et plus précisément le moteur d'entraînement, est piloté par un module de commande. Le module de commande permet notamment de faire varier la vitesse du moteur selon les besoins et comporte à cet effet des composants, plus particulièrement des composants électriques et électroniques, dont des composants électroniques de puissance, notamment des composants électroniques de puissance actifs. On peut citer par exemple les composants semi-conducteurs tels que des diodes, des transistors, notamment des transistors à effet de champ à grille isolée connus sous l'acronyme anglais MOSFET pour « Métal Oxide Semiconductor Field Effect Transistor ». Par opposition aux composants passifs qui ne peuvent pas introduire d'énergie dans le circuit auquel ils appartiennent et qui ne peuvent pas être modifiés, les composants actifs peuvent changer d'état et conduire ou bloquer de l'énergie.

Une problématique est le refroidissement du module de commande. Par exemple, en fonctionnement les composants électroniques de puissance actifs tels que les MOSFET peuvent atteindre une température de l'ordre de 175°C. Si la température du module de commande dépasse une température maximale prédéfinie cela risque d'endommager certains éléments du module de commande comme les composants électroniques de puissance ou encore une carte à circuit imprimé reliée électriquement à ces derniers.

Pour dissiper la chaleur engendrée par les composants du module de commande, il est connu de lui associer un dissipateur thermique ou radiateur de dissipation thermique.

Pour ce faire, le dissipateur thermique est généralement vissé sur la carte à circuit imprimé sur laquelle est ou sont montés le ou les composants électroniques de puissance du module de commande. Le dissipateur thermique comporte des ailettes qui sont agencées pour être exposées au flux d'air engendré dans la volute. À cet effet, le dissipateur thermique est généralement disposé en sortie de la volute. Une interface de dissipation thermique aussi appelée semelle de dissipation thermique peut être disposée sur le dissipateur thermique du côté opposé aux ailettes, entre le dissipateur thermique et la carte à circuit imprimé.

Cependant, une telle fixation par vissage, présente un risque majeur de dévissage en fonctionnement entraînant une désolidarisation du dissipateur thermique et du ou des composants du module de commande.

En variante, il est connu d'utiliser un ou plusieurs clips ou languettes, agencés de façon à venir appuyer sur le(s) composant(s) électronique(s) du module de commande pour qu'il(s) soi(en)t en contact avec le dissipateur thermique. L'inconvénient de tels clips est que la force exercée sur le ou les composants électroniques du module de commande n'est pas homogène et peut endommager ces composants, notamment le boîtier plastique entourant chaque composant.

Le document DE 10 2010 046672 divulge un type connu de module de commande d'un pulseur pour installation de chauffage et/ou ventilation et/ou climatisation notamment pour véhicule automobile, le pulseur étant configuré pour générer un flux d'air et le module de commande étant configuré le pulseur et comportant un dissipateur thermique, une semelle de dissipation thermique, et au moins un composant électronique de puissance actif monté sur la semelle de dissipation thermique. L'invention a pour but d'assurer un refroidissement efficace des composants du module de commande tout en améliorant et en fiabilisant l'assemblage entre le module de commande et le dissipateur thermique.

À cet effet l'invention a pour objet un module de commande d'un pulseur pour installation de chauffage et/ou ventilation et/ou climatisation notamment pour véhicule automobile, le pulseur étant configuré pour générer un flux d'air et le module de commande étant configuré pour piloter le pulseur et comporte un dissipateur thermique, une semelle de dissipation thermique et au moins un composant électronique de puissance actif monté sur la semelle de dissipation thermique.

Selon l'invention, le dissipateur thermique comporte un logement de réception d'au moins une partie de la semelle de dissipation thermique, et la semelle de dissipation thermique est montée par emmanchement à force dans ledit logement.

Ainsi, le dissipateur thermique appuie sur la semelle de dissipation thermique emmanchée à force dans le logement prévu à cet effet au niveau du dissipateur thermique. Le dissipateur thermique est donc conformé pour recevoir et coopérer avec la semelle de dissipation thermique afin d'assurer l'assemblage et le maintien du composant actif en contact thermique sur le dissipateur thermique.

Ledit module peut en outre comporter une ou plusieurs caractéristiques suivantes, prises séparément ou en combinaison :
- la semelle de dissipation thermique présente au moins deux faces opposées agencées en contact avec le dissipateur thermique, lorsque la semelle de dissipation thermique est reçue dans ledit logement ;
- la semelle de dissipation thermique est en prise dans ledit logement par coopération de forme avec le dissipateur thermique ;
- le dissipateur thermique comporte au moins un moyen de retenue élastique de la semelle de dissipation thermique dans le logement ;
- le dissipateur thermique comporte au moins une paroi flexible délimitant ledit logement ;
- le dissipateur thermique comporte une base s'étendant en regard de ladite au moins une paroi flexible ;
- ledit logement est délimité entre la base et ladite au moins une paroi flexible ;
- la paroi flexible est configurée pour s'écarter de la base lors de l'insertion de la semelle de dissipation thermique dans ledit logement, et pour exercer une pression élastique sur la semelle de dissipation thermique reçue dans ledit logement ;
- le dissipateur thermique comporte des ailettes de refroidissement s'étendant à partir de la base et configurées pour être agencées dans le flux d'air généré par le pulseur ;
- la semelle de dissipation thermique est configurée pour être insérée dans ledit logement selon un mouvement de translation ;
- le dissipateur thermique est métallique ;
- la semelle de dissipation thermique est métallique ;
- le module de commande comporte une carte à circuit imprimé présentant un circuit d'alimentation électrique du pulseur auquel est relié ledit au moins un composant électronique de puissance par au moins un organe de liaison électrique ;
- le dissipateur thermique comporte au moins un élément de fixation au niveau dudit logement configuré pour coopérer avec la semelle de dissipation thermique.

L'invention concerne aussi une installation de chauffage et/ou ventilation et/ou climatisation comportant un pulseur configuré pour générer un flux d'air, et au moins un module de commande tel que défini précédemment.

D'autres caractéristiques et avantages de l'invention apparaîtront plus clairement à la lecture de la description suivante, donnée à titre d'exemple illustratif et non limitatif, et des dessins annexés parmi lesquels :
- la figure 1 est une vue schématique et partiellement en coupe montrant en partie une installation de chauffage et/ou ventilation et/ou climatisation notamment pour véhicule automobile,
- la figure 2 est une vue d'une volute de l'installation de la figure 1 logeant un pulseur d'air,
- la figure 3 est une représentation schématique en perspective montrant en partie un module de commande du pulseur d'air,
- la figure 4 montre de façon schématique un composant électronique de puissance actif avant insertion dans un logement d'un dissipateur thermique du module de commande de la figure 3, et
- la figure 5 montre de façon schématique le composant électronique de puissance actif après insertion dans le logement du dissipateur thermique du module de commande.

Sur ces figures, les éléments identiques portent les mêmes références.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent à un seul mode de réalisation. De simples caractéristiques de différents modes de réalisation peuvent également être combinées ou interchangées pour fournir d'autres réalisations.

Dans la description, on peut indexer certains éléments, comme par exemple premier ou deuxième élément. Dans ce cas, il s'agit d'un simple indexage pour différencier et dénommer des éléments proches mais non identiques. Cette indexation n'implique pas une priorité d'un élément par rapport à un autre et on peut aisément interchanger de telles dénominations sans sortir du cadre de la présente description. Cette indexation n'implique pas non plus un ordre dans le temps.

On a représenté sur la figure 1 de façon schématique une partie d'une installation 1 de chauffage et/ou ventilation et/ou climatisation, désignée par la suite par installation 1, notamment pour véhicule automobile.

L'installation 1 délimite au moins un canal 2 à l'intérieur duquel au moins un flux d'air est apte à circuler.

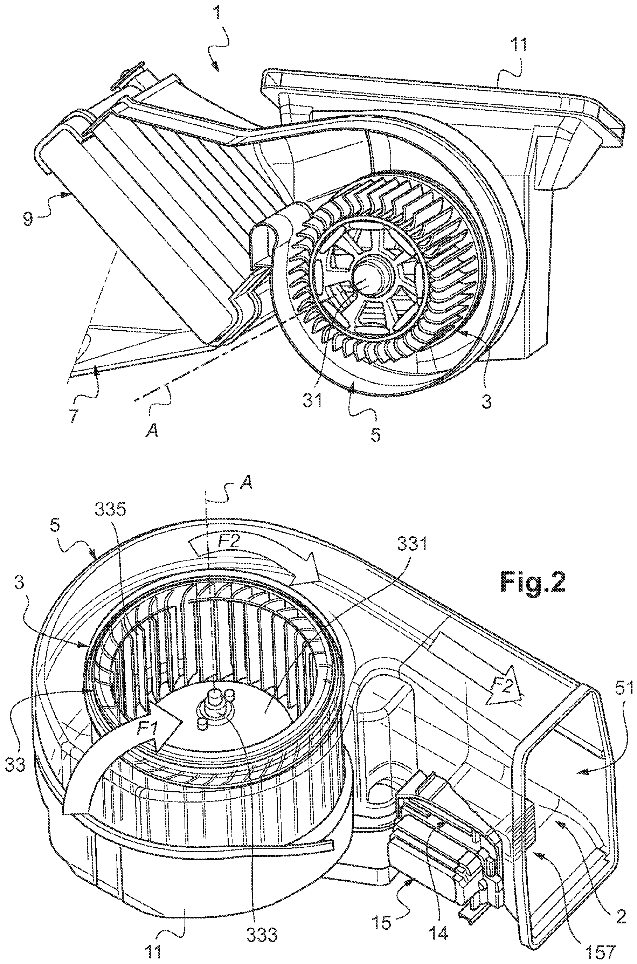

Une telle installation 1 comporte un groupe moto-ventilateur aussi appelé pulseur ou pulseur d'air 3 (voir figures 1 et 2), apte à générer un flux d'air.

L'installation 1 comporte une volute 5, dans laquelle le pulseur 3 est destiné à être monté, et qui assure la canalisation du flux d'air généré par le pulseur 3.

La volute 5 peut présenter une forme sensiblement en spirale. La volute 5 présente alors un contour débutant par une zone appelée « nez de volute » et qui évolue jusqu'à une sortie 51.

En fonctionnement, le pulseur 3, permet de diriger le flux d'air vers un conduit 7 de l'installation 1 qui distribue le flux d'air vers des bouches de sortie s'ouvrant dans l'habitacle du véhicule. Pour ce faire, la sortie 51 de volute 5 est raccordée au conduit 7.

Dans l'exemple décrit, la volute 5 et le conduit 7 délimitent le canal 2 de circulation pour le flux d'air généré par le pulseur 3.

Par ailleurs, avant de déboucher dans l'habitacle, le flux d'air peut subir au moins un traitement thermique, par exemple il peut être chauffé ou refroidi. À cet effet, l'installation 1 comporte de plus un ou plusieurs échangeurs thermiques 9 disposés dans le conduit 7 et destinés à être traversés par le flux d'air. Ces échangeurs thermiques 9 connus de l'Homme du métier des installations de chauffage et/ou ventilation et/ou climatisation ne sont pas décrits plus en détail par la suite.

Le pulseur 3 comporte un moteur 31 et une roue 33 aussi appelée roue de ventilateur ou roue de pulseur, destinée à être entraînée par le moteur 31, de façon à assurer la mise en mouvement du flux d'air. Le moteur 31 est configuré pour entraîner la roue de ventilateur 33 en rotation autour d'un axe de rotation A.

La roue de ventilateur 33 est logée à l'intérieur de la volute 5. Sur un de ses côtés, la volute 5 présente une ouverture fermée par un capot 11 formant support du moteur 31 pour entraîner la roue de ventilateur 33. Le moteur 31 et la roue de ventilateur 33 sont coaxiaux.

Dans l'exemple illustré sur la figure 2, la roue de ventilateur 33 présente une forme générale sensiblement cylindrique, avec une face ouverte. La face ouverte est du côté opposé au capot 11 formant support moteur. Cette face ouverte est, à l'état monté du pulseur 3 dans l'installation 1, en communication aéraulique avec une ou plusieurs entrées d'air 11 (voir figure 1), par exemple d'air extérieur en provenance de l'extérieur de l'habitacle et/ou d'air recirculé en provenance de l'habitacle, de l'installation 1.

La roue de ventilateur 33 est configurée pour aspirer par cette face ouverte un flux d'air tel que schématisé par la flèche *F1* sur la figure 2, puis pour évacuer ce flux d'air par le côté, c'est-à-dire ici radialement par rapport à l'axe de rotation A, tel que schématisé par les flèches *F2,* lorsqu'elle est entraînée en rotation. L'air aspiré et mis en circulation par la roue de ventilateur 33 est extrait de la volute 5 par la sortie 51.

Selon le mode de réalisation représenté sur la figure 2, la roue de ventilateur 33 présente une partie 331 formant un fond, par exemple sensiblement en forme de bol, qui est agencée à l'opposé de la face ouverte de la roue de ventilateur 33. La roue de ventilateur 33 comporte de plus un moyeu 333, par exemple sensiblement au centre de la partie en forme de bol 331, pour recevoir une extrémité libre d'un arbre de transmission du moteur 31. La roue de ventilateur 33 peut comprendre une pluralité de pales 335 ou ailettes. Les pales 335 s'étendent dans cet exemple axialement depuis la périphérie de la partie en forme de bol 331.

Un tel pulseur 3 est piloté par un module de commande 15 représenté de façon très schématique sur la figure 2. Plus précisément, le module de commande 15 permet de piloter le moteur 31, par exemple la vitesse de rotation du moteur 31 (non visible sur la figure 2).

Ce module de commande 15 est agencé dans l'installation 1, par exemple au niveau de la sortie 51 de volute 5, comme illustré sur la figure 2. Une cavité 14 peut être prévue sur une paroi de la sortie 51 de volute 5, pour recevoir le module de commande 15. Cet emplacement est à titre d'illustration et n'est pas limitatif. Le module de commande 15 peut être agencé ailleurs dans l'installation 1, par exemple sur une paroi du conduit 7 (en se référant également à la figure 1). L'emplacement du module de commande 15 peut être choisi pour limiter la longueur de câbles conducteurs entre le module de commande 15 et le pulseur 3.

Le module de commande 15 comporte généralement une carte à circuit imprimé (non représentée sur les figures). La carte à circuit imprimé présente un circuit d'alimentation électrique du pulseur. La carte à circuit imprimé est sous forme de plaque.

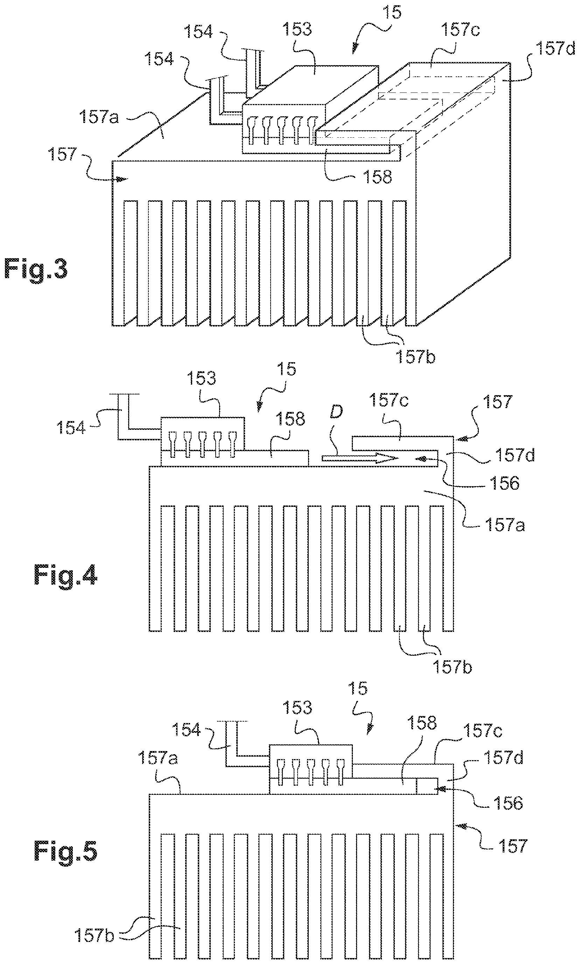

Le module de commande 15 comporte un ou plusieurs composants électroniques, dont au moins un composant électronique de puissance relié électriquement au circuit d'alimentation électrique. En particulier, le module de commande 15 comporte au moins un composant électronique de puissance actif 153, désigné par la suite par « composant actif », représenté de façon schématique sur les figures 3 à 5.

Par opposition à un composant dit passif, tel qu'une résistance, qui ne permet pas d'introduire d'énergie dans le circuit auquel il appartient ni d'augmenter la puissance d'un signal et qui ne peut pas être modifié, un composant actif 153 est un composant électronique qui permet d'augmenter la puissance d'un signal, peut changer d'état et conduire ou bloquer de l'énergie. On peut parler également de composant pilotable. On peut citer en majorité des composants semi-conducteurs, tels que des diodes, des transistors, notamment des transistors à effet de champ à grille isolée connus sous l'acronyme anglais MOSFET pour « Métal Oxide Semiconductor Field Effect Transistor ».

De façon connue, le composant actif 153 comporte une puce qui est encapsulée dans un boîtier plastique.

Selon le mode de réalisation décrit, le composant actif 153 peut être relié par au moins un organe de liaison électrique, tel que des pattes ou broches de liaison électrique 154 (figure 3), à la carte à circuit imprimé, en particulier au circuit. Cette configuration avec le composant actif 153 déporté de la carte à circuit imprimé, permet de limiter les risques d'endommagement de la carte à circuit imprimé dû à une température trop élevée du composant actif 153. En effet, la carte à circuit imprimé est plus limitée en température que le composant actif 153. La carte à circuit imprimé peut atteindre une température maximale de l'ordre de 150°C tandis que le composant actif 153 peut atteindre une température maximale supérieure à 150°C, notamment de l'ordre de 175°C.

Selon le mode de réalisation décrit, le module de commande 15 comporte en outre une semelle de dissipation thermique 158. Une telle semelle 158 est par exemple métallique. Elle peut présenter une forme générale de plaque. Le composant actif 153 est monté sur la semelle de dissipation thermique 158.

Le module de commande 15 comporte en outre au moins un dissipateur thermique 157 ou radiateur de dissipation thermique (voir figures 3 à 5). Le dissipateur thermique 157 est configuré pour dissiper au moins une partie de la chaleur engendrée notamment par le(s) composant(s) électronique(s) de puissance du module de commande 15, comme le composant actif 153.

Le dissipateur thermique 157 est réalisé dans un matériau conducteur thermiquement. Il s'agit par exemple d'une pièce métallique.

Le dissipateur thermique 157 est relié à la masse.

Selon l'exemple de réalisation illustré, le dissipateur thermique 157 comporte une base 157a, que l'on peut aussi désigner par socle.

Le dissipateur thermique 157 comporte par exemple également des ailettes de refroidissement 157b s'étendant à partir de la base 157a. Les ailettes 157b sont destinées à être agencées dans le flux d'air généré par le pulseur 3 (non visible sur les figures 3 à 5), à l'état monté du module de commande 15 dans l'installation 1 et en fonctionnement du pulseur 3. En d'autres termes, le module de commande 15 est destiné à être agencé dans l'installation de sorte que les ailettes 157b du dissipateur thermique 157 s'étendent au moins en partie dans le canal 2 de circulation (non visible sur les figures 3 à 5). Pour ce faire, le module de commande 15 et en particulier le dissipateur thermique 157 peut être monté au niveau d'une paroi du conduit 7 ou de la sortie 51 de volute 5 (en se référant également aux figures 1 et 2).

Le dissipateur thermique 157 présente encore une paroi 157c agencée en regard de la base 157a, du côté opposé aux ailettes 157b.

Il s'agit en particulier d'une paroi flexible 157c (la flexibilité de la paroi peut être due à son épaisseur et/ou au matériau utilisé). Selon le cas particulier décrit, on entend par « flexible », le fait que la paroi 157c est susceptible de se déformer sous l'action d'un effort extérieur tendant à l'écarter de la base 157a. À l'état libre ou neutre, sans pression exercée, la paroi flexible 157c peut s'étendre parallèlement ou quasi-parallèlement à la base 157a.

En outre, il peut s'agir d'une paroi 157c plane ou sensiblement plane. Enfin, elle est reliée à la base 157a par une ou plusieurs parties de raccordement 157d.

Comme cela est mieux visible sur les figures 4 et 5, le dissipateur thermique 157 comporte un espace ou un logement 156. Ce logement 156 est délimité entre la base 157a du dissipateur thermique 157 et la paroi flexible 157c. Dans l'exemple illustré, seule une partie de raccordement 157d relie la paroi flexible 157c à la base 157a, fermant ainsi à une extrémité le logement 156. En variante, on peut prévoir d'autres parties de raccordement 157d, de sorte que le logement 156 soit fermé également sur le(s) côté(s).

De plus, de façon à pouvoir dissiper la chaleur générée par le composant actif 153, le dissipateur thermique 157 est agencé en contact thermique avec le composant actif 153. On entend par « contact thermique », le fait que deux éléments soient agencés en contact direct ou assemblés de façon indirecte avec interposition d'un ou plusieurs conducteurs thermiques, de façon à permettre dans l'un ou l'autre cas la conduction de la chaleur générée entre ces éléments. Selon le mode de réalisation particulier décrit, la semelle de dissipation thermique 158 sur laquelle est monté le composant actif 153 est destinée à être fixée au dissipateur thermique 157. De la sorte, le composant actif 153 est agencé en contact thermique avec le dissipateur thermique 157 par l'intermédiaire de la semelle de dissipation thermique 158, qui permet la conduction de la chaleur générée par le composant actif 153 vers le dissipateur thermique 157.

La semelle de dissipation thermique 158 est distincte du dissipateur thermique 157. Il s'agit donc d'une autre pièce.

Afin de permettre l'assemblage de la semelle de dissipation thermique 158 sur le dissipateur thermique 157, le logement 156 est configuré pour recevoir au moins en partie cette semelle de dissipation thermique 158. L'assemblage se fait par emmanchement à force de la semelle de dissipation thermique 158 dans le logement 156. On parle également de serrage à force ou « press-fit » en anglais.

Pour ce faire, la semelle de dissipation thermique 158 est configurée pour être insérée dans le logement 156, par exemple selon un mouvement de translation. Le mouvement de translation s'effectue suivant une direction d'insertion D (figure 4). La direction d'insertion D peut être parallèle au plan général défini par la base 157a du dissipateur thermique 157. Dans l'exemple de la figure 4, la direction d'insertion D est horizontale en référence à la disposition des éléments sur cette figure. Cette représentation n'est pas limitative, la direction d'insertion D peut être adaptée selon les configurations d'assemblage du module de commande 15.

Le dissipateur thermique 157 peut comporter un élément de guidage de la semelle de dissipation thermique 158 lors de son insertion dans le logement 156. Cette fonction de guidage peut être assurée par la base 157a et/ou la paroi flexible 157c.

Lors de l'insertion de la semelle de dissipation thermique 158 dans le logement 156, la paroi flexible 157c est configurée pour s'écarter de la base 157a. La paroi flexible 157c se déforme donc vers l'extérieur du logement 156. Ceci augmente la section de passage pour la semelle de dissipation thermique 158 durant son insertion dans le logement 156.

On peut prévoir une ou plusieurs butées de fin de course de la semelle de dissipation thermique 158 dans le logement 156. Ces butées peuvent être formées sur ou par la ou les parties de raccordement 157d. En variante ou en complément, les butées peuvent être formées sur ou par l'extrémité libre de la paroi flexible 157c.

En outre, le logement 156 est tel que le dissipateur thermique 157 entoure au moins partiellement la semelle de dissipation thermique 158 lorsqu'elle est montée dans le logement 156. Dans l'exemple illustré sur les figures 3 et 5, le dissipateur thermique 157 vient à la fois au-dessus et en-dessous de la semelle de dissipation thermique 158 en référence à la disposition particulière des éléments sur ces figures.

Autrement dit, lorsqu'elle est reçue dans le logement 156, la semelle de dissipation thermique 158 présente au moins deux faces opposées qui sont agencées en contact avec le dissipateur thermique 157.

Dans l'exemple décrit dans lequel le logement 156 est délimité par la base 157a et la paroi flexible 157c du dissipateur thermique 157, à l'état monté dans le logement 156, la semelle de dissipation thermique 158 présente une première face agencée en contact avec la base 157a tandis qu'une deuxième face opposée est agencée en contact avec la paroi flexible 157c. La semelle de dissipation thermique 158 est en contact surfacique avec à la fois la paroi flexible 157c et la base 157a du dissipateur thermique 157. On assure ainsi une dissipation thermique au moins par ces deux côtés de la semelle de dissipation thermique 158.

La semelle de dissipation thermique 158 est en prise, ou enserrée, dans le logement 156 par coopération de forme avec le dissipateur thermique 157. En d'autres termes, le dissipateur thermique 157 épouse la forme de la semelle de dissipation thermique 158 lorsqu'elle est insérée dans le logement 156. Ce sont les parois du dissipateur thermique 157 qui délimitent le logement 156 qui épousent la forme de la semelle de dissipation thermique 158. En clair, dans l'exemple décrit, la base 157a, la paroi flexible 157c et la ou les parties de raccordement 157d définissent un logement 156 de forme complémentaire à la forme de la semelle de dissipation thermique 158.

En outre, lorsque la semelle de dissipation thermique 158 est reçue dans le logement 156, le dissipateur thermique 157 est apte à exercer une pression élastique sur cette semelle 158. Le dissipateur thermique 157 comporte à cet effet au moins un moyen de retenue élastique de la semelle de dissipation thermique 158 dans le logement 156. Il peut s'agir d'un moyen de clippage.

Selon le mode de réalisation décrit, c'est la paroi flexible 157c qui exerce une telle pression élastique et forme donc le moyen de retenue élastique. La paroi flexible 157c vient fermement appuyer sur la semelle de dissipation thermique 158. La semelle de dissipation thermique 158 est ainsi retenue dans le logement 156.

Dans l'exemple décrit, la pression est exercée sur la semelle de dissipation thermique 158 dans une direction normale au plan général défini par la semelle de dissipation thermique 158.

La semelle de dissipation thermique 158 présente une surface libre, qui est dépourvue du composant actif 153, formant une surface d'appui contre laquelle vient se positionner et appuyer par exemple la paroi flexible 157c. La paroi flexible 157c présente au moins une surface s'étendant parallèlement à la semelle de dissipation thermique 158, notamment à cette surface d'appui libre, à l'état monté de la semelle de dissipation thermique 158 dans le logement 156. De plus, la paroi flexible 157c s'étend sur toute ou quasiment toute la surface d'appui libre de la semelle de dissipation thermique 158.

En complément de la pression élastique exercée par la paroi flexible 157c sur la semelle de dissipation thermique 158, on peut envisager que le dissipateur thermique 157 comporte au moins un élément ou organe de fixation au niveau du logement 156, configuré pour coopérer avec la semelle de dissipation thermique 158, de façon à participer également au maintien de cette semelle 158 dans le logement 15 (on peut par exemple aménager des formes complémentaires aptes à coopérer les unes avec les autres dont la déformation ne serait possible que dans le sens du montage de la semelle dans le logement)

Par ailleurs, selon le mode de réalisation illustré sur les figures 3 à 5, la carte à circuit imprimé (non représentée) n'est pas agencée dans le logement 156 formé par le dissipateur thermique 157. Elle est donc déportée de ce logement 156. Avec cette configuration, on améliore la dissipation de chaleur générée par le composant actif 153 à travers le dissipateur thermique 157 destiné à être refroidi par le flux d'air.

Ainsi, on emmanche à force la semelle de dissipation thermique 158 portant un composant électronique de puissance générant de la chaleur, comme le composant actif 153, dans le logement 156 défini par le dissipateur thermique 157, pour former le module de commande 15. C'est un montage simple, ne nécessitant pas de soudage ou collage par exemple, qui permet le positionnement et le maintien du composant actif 153 en contact thermique avec le dissipateur thermique 157. Ce dissipateur thermique 157 est également destiné à être refroidi par le flux d'air généré par le pulseur 3 lorsque le module de commande 15 est monté sur l'installation 1.

La paroi flexible 157c, ainsi que la partie de raccordement 157d et la base 157a qui délimitent ensemble le logement 156, épousent la forme de la semelle de dissipation thermique 158 lorsqu'elle est insérée dans le logement 156. La paroi flexible 157c forme un moyen de retenue de la semelle de dissipation thermique 158 dans le logement 156.

Par ailleurs, les surfaces coopérant entre elles sont les surfaces du dissipateur thermique 157 et de la semelle de dissipation thermique 158, qui sont avantageusement toutes deux métalliques, de sorte qu'il n'y a pas d'endommagement du composant actif 153, plus particulièrement du boîtier plastique dans lequel est encapsulée la puce du composant actif 153.

## Revendications

1. Module de commande (15) d'un pulseur (3) pour installation (1) de chauffage et/ou ventilation et/ou climatisation notamment pour véhicule automobile, le pulseur (3) étant configuré pour générer un flux d'air et le module de commande (15) étant configuré pour piloter le pulseur (3) et comporte :
- un dissipateur thermique (157),
- une semelle de dissipation thermique (158) et
- au moins un composant électronique de puissance actif (153) monté sur la semelle de dissipation thermique (158),
**caractérisé en ce que** :
- le dissipateur thermique (157) comporte un logement (156) de réception d'au moins une partie de la semelle de dissipation thermique (158), et **en ce que**
- la semelle de dissipation thermique (158) est montée par emmanchement à force dans ledit logement (156).

2. Module de commande (15) selon la revendication précédente, dans lequel la semelle de dissipation thermique (158) présente au moins deux faces opposées agencées en contact avec le dissipateur thermique (157), lorsque la semelle de dissipation thermique (158) est reçue dans ledit logement (156).

3. Module de commande (15) selon l'une quelconque des revendications, dans lequel le dissipateur thermique (157) comporte au moins une paroi flexible (157c) délimitant ledit logement (156).

4. Module de commande (15) selon la revendication précédente, dans lequel le dissipateur thermique (157) comporte une base (157a) s'étendant en regard de ladite au moins une paroi flexible (157c), ledit logement (156) étant délimité entre la base (157a) et ladite au moins une paroi flexible (157c).

5. Module de commande (15) selon la revendication précédente, dans lequel la paroi flexible (157c) est configurée pour s'écarter de la base (157a) lors de l'insertion de la semelle de dissipation thermique (158) dans ledit logement (156), et pour exercer une pression élastique sur la semelle de dissipation thermique (158) reçue dans ledit logement (156).

6. Module de commande (15) selon l'une quelconque des revendications 4 ou 5, dans lequel le dissipateur thermique (157) comporte des ailettes (157b) de refroidissement s'étendant à partir de la base (157a) et configurées pour être agencées dans le flux d'air généré par le pulseur (3).

7. Module de commande (15) selon l'une quelconque des revendications précédentes, dans lequel la semelle de dissipation thermique (158) est configurée pour être insérée dans ledit logement (156) selon un mouvement de translation.

8. Module de commande (15) selon l'une quelconque des revendications précédentes, dans lequel le dissipateur thermique (157) et la semelle de dissipation thermique (158) sont métalliques.

9. Module de commande (15) selon l'une quelconque des revendications précédentes, dans lequel le dissipateur thermique (157) comporte au moins un élément de fixation au niveau dudit logement (156), configuré pour coopérer avec la semelle de dissipation thermique (158).

10. Installation (1) de chauffage et/ou ventilation et/ou climatisation comportant un pulseur (3) configuré pour générer un flux d'air, **caractérisée en ce qu'**elle comporte au moins un module de commande (15) du pulseur (3) selon l'une quelconque des revendications précédentes.

## Patentansprüche

1. Steuermodul (15) eines Gebläses (3) für eine Heizungs- und/oder Belüftungs- und/oder Klimasteuerungsanlage (1), insbesondere für ein Kraftfahrzeug, wobei das Gebläse (3) konfiguriert ist, einen Luftstrom zu erzeugen, und das Steuermodul (15) konfiguriert ist, das Gebläse (3) zu steuern und aufweist:
- einen Wärmeableiter (157),
- eine Wärmeableitungsplatte (158) und
- mindestens ein aktives elektronisches Leistungsbauteil (153), das auf die Wärmeableitungsplatte (158) montiert ist,
**dadurch gekennzeichnet**, das:
- der Wärmeableiter (157) eine Aufnahme (156) für den Empfang mindestens eines Teils der Wärmeableitungsplatte (158) aufweist, und dass
- die Wärmeableitungsplatte (158) durch Krafteinpassung in die Aufnahme (156) montiert wird.

2. Steuermodul (15) nach dem vorhergehenden Anspruch, wobei die Wärmeableitungsplatte (158) mindestens zwei gegenüberliegende Seiten aufweist, die in Kontakt mit dem Wärmeableiter (157) angeordnet sind, wenn die Wärmeableitungsplatte (158) in der Aufnahme (156) empfangen wird.

3. Steuermodul (15) nach einem der Ansprüche, wobei der Wärmeableiter (157) mindestens eine flexible Wand (157c) aufweist, die die Aufnahme (156) begrenzt.

4. Steuermodul (15) nach dem vorhergehenden Anspruch, wobei der Wärmeableiter (157) eine Basis (157a) aufweist, die sich gegenüber der mindestens einen flexiblen Wand (157c) erstreckt, wobei die Aufnahme (156) zwischen der Basis (157a) und der mindestens einen flexiblen Wand (157c) begrenzt ist.

5. Steuermodul (15) nach dem vorhergehenden Anspruch, wobei die flexible Wand (157c) konfiguriert ist, sich bei der Einführung der Wärmeableitungsplatte (158) in die Aufnahme (156) von der Basis (157a) zu entfernen, und einen elastischen Druck auf die in der Aufnahme (156) empfangene Wärmeableitungsplatte (158) auszuüben.

6. Steuermodul (15) nach einem der Ansprüche 4 oder 5, wobei der Wärmeableiter (157) Kühllamellen (157b) aufweist, die sich ausgehend von der Basis (157a) erstrecken und konfiguriert sind, in dem vom Gebläse (3) erzeugten Luftstrom angeordnet zu sein.

7. Steuermodul (15) nach einem der vorhergehenden Ansprüche, wobei die Wärmeableitungsplatte (158) konfiguriert ist, gemäß einer Translationsbewegung in die Aufnahme (156) eingeführt zu werden.

8. Steuermodul (15) nach einem der vorhergehenden Ansprüche, wobei der Wärmeableiter (157) und die Wärmeableitungsplatte (158) aus Metall sind.

9. Steuermodul (15) nach einem der vorhergehenden Ansprüche, wobei der Wärmeableiter (157) mindestens ein Befestigungselement im Bereich der Aufnahme (156) aufweist, das konfiguriert ist, mit der Wärmeableitungsplatte (158) zusammenzuwirken.

10. Heizungs- und/oder Belüftungs- und/oder Klimasteuerungsanlage (1), die ein Gebläse (3) aufweist, das konfiguriert ist, einen Luftstrom zu erzeugen, **dadurch gekennzeichnet, dass** sie mindestens ein Steuermodul (15) des Gebläses (3) nach einem der vorhergehenden Ansprüche aufweist.

## Claims

1. Control module (15) for a blower (3) for a heating and/or ventilation and/or air conditioning installation (1), in particular for a motor vehicle, the blower (3) being configured to generate an air flow and the control module (15) being configured to control the blower (3) and comprises:
- a heat sink (157),
- a heat dissipation pad (158) and
- at least one active electronic power component (153) mounted on the heat dissipation pad (158),
**characterized in that**:
- the heat sink (157) comprises a slot (156) for receiving at least a portion of the heat dissipation pad (158), and **in that**
- the heat dissipation pad (158) is mounted by force fitting in said slot (156).

2. Control module (15) according to the preceding claim, in which the heat dissipation pad (158) has at least two opposite faces arranged in contact with the heat sink (157), when the heat dissipation pad (158) is received in said slot (156).

3. Control module (15) according to any one of the claims, in which the heat sink (157) comprises at least one flexible wall (157c) delimiting said slot (156) .

4. Control module (15) according to the preceding claim, in which the heat sink (157) comprises a base (157a) extending opposite said at least one flexible wall (157c), said slot (156) being delimited between the base (157a) and said at least one flexible wall (157c) .

5. The control module (15) according to the preceding claim, wherein the flexible wall (157c) is configured to move away from the base (157a) upon insertion of the heat dissipation pad (158) into said slot (156), and to exert an elastic pressure on the heat dissipation pad (158) received in said slot (156).

6. Control module (15) according to either one of Claims 4 and 5, wherein the heat sink (157) has cooling fins (157b) extending from the base (157a) and configured to be arranged in the air flow generated by the blower (3).

7. Control module (15) according to any one of the preceding claims, wherein the heat dissipation pad (158) is configured to be inserted into said slot (156) with a translational movement.

8. Control module (15) according to any one of the preceding claims, wherein the heat sink (157) and the heat dissipation pad (158) are metallic.

9. Control module (15) according to any one of the preceding claims, in which the heat sink (157) comprises at least one fixing element at the level of said slot (156), configured to cooperate with the heat dissipation pad (158).

10. Heating and/or ventilation and/or air conditioning installation (1) comprising a blower (3) configured to generate an air flow, **characterized in that** it comprises at least one control module (15) for the blower (3) according to any one of the preceding claims.
